(19) Europäisches Patentamt
European Patent Office
Office européen des brevets

(11) **EP 2 342 876 B1**

## (12) EUROPÄISCHE PATENTSCHRIFT

(45) Veröffentlichungstag und Bekanntmachung des Hinweises auf die Patenterteilung:
**06.11.2013 Patentblatt 2013/45**

(21) Anmeldenummer: **09764706.9**

(22) Anmeldetag: **25.09.2009**

(51) Int Cl.:
**H04L 25/03** (2006.01)    **H04L 27/38** (2006.01)

(86) Internationale Anmeldenummer:
**PCT/DE2009/075054**

(87) Internationale Veröffentlichungsnummer:
**WO 2010/034310 (01.04.2010 Gazette 2010/13)**

(54) **DEZENTRALER UND KOOPERATIVER EMPFANG VON DATEN DURCH BASISSTATIONEN**

DECENTRALIZED AND COOPERATIVE DATA RECEPTION THROUGH BASE STATIONS

RÉCEPTION DÉCENTRALISÉE ET COOPÉRATIVE DE DONNÉES PAR DES STATIONS DE BASE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **26.09.2008 EP 08165231**
**02.10.2008 EP 08165718**

(43) Veröffentlichungstag der Anmeldung:
**13.07.2011 Patentblatt 2011/28**

(73) Patentinhaber: **Vodafone Holding GmbH**
**40213 Düsseldorf (DE)**

(72) Erfinder: **KHATTAK, Shahid**
**Canal Town**
**Peshawar University (PK)**

(74) Vertreter: **KNH Patentanwälte**
**Postfach 10 33 63**
**40024 Düsseldorf (DE)**

(56) Entgegenhaltungen:
**EP-A1- 1 906 559**

- **SHAHID KHATTAK, WOLFGANG RAVE, AND GERHARD FETTWEIS: "Distributed Iterative Multiuser Detection through Base Station Cooperation" EURASIP JOURNAL ON WIRELESS COMMUNICATIONS AND NETWORKING, Bd. 2008, Januar 2008 (2008-01), XP002598695 Hindawi Publishing Corporation DOI: 10.1155/2008/390489**

- **S. KHATTAK AND G. FETTWEIS: "SAIC aided Distributed Iterative Detection in an Uplink OFDM System" PROCEEDINGS OF THE INTERNATIONAL OFDM-WORKSHOP (INOWO'07), 30. August 2007 (2007-08-30), - 31. Juli 2007 (2007-07-31) XP002598696 Hamburg, Germany**

- **SHAHID KHATTAK ET AL: "Low Backhaul Distributed Detection Strategies for an Interference Limited Uplink Cellular System" IEEE VEHICULAR TECHNOLOGY CONFERENCE - VTC SPRING 2008, 11. Mai 2008 (2008-05-11), Seiten 693-697, XP031255617 NJ, USA ISBN: 978-1-4244-1644-8**

- **SHAHID KHATTAK ET AL: "Distributed Iterative Detection in an Interference Limited Cellular Network" IEEE VEHICULAR TECHNOLOGY CONFERENCE - VTS 2007, PROCEEDINGS, 1. April 2007 (2007-04-01), Seiten 2349-2353, XP031093051 IEEE, US in der Anmeldung erwähnt**

- **WON-JOON CHOI ET AL: "Iterative soft interference cancellation for multiple antenna systems" IEEE WIRELESS COMMUNICATIONS AND NETWORKING CONFERNCE - WCNC 2000, Bd. 1, 23. September 2000 (2000-09-23), - 28. September 2000 (2000-09-28) Seiten 304-309, XP010532514 NJ, USA ISBN: 978-0-7803-6596-4**

## Beschreibung

### Technisches Gebiet

Die Erfindung betrifft ein Verfahren zum Eliminieren von Interferenzen für einen Verbund von Basisstationen eines Mobilfunknetzes bei einem Empfang von Daten, welche von Mobilfunkendgeräten in dem Mobilfunknetz übermittelt werden, wobei

a) die Daten bei einem Mobilfunkendgerät als Symbole eines Modulationsalphabets codiert und auf eine Trägerfrequenz zur Übermittlung moduliert werden,

b) Informationen bezüglich der bei Basisstationen des Verbundes empfangenen Symbole zwischen den Basisstationen über Kommunikationsverbindungen zum Eliminieren von Interferenzen übermittelt werden und

c) die Basisstationen des Verbundes empfangene Symbole kooperativ und dezentral demodulieren und decodieren.

Weiterhin betrifft die Erfindung eine Basisstation in einem Verbund von Basisstationen eines Mobilfunknetzes zum Eliminieren von Interferenzen beim Empfang von Daten, welche von Mobilfunkendgeräten in dem Mobilfunknetz übermittelt werden, enthaltend

a) einen Empfänger zum Empfangen der Daten, welche bei einem Mobilfunkendgerät als Symbole eines Modulationsalphabets codiert und auf eine Trägerfrequenz zur Übermittlung moduliert werden,

b) eine Schnittstelle zum Senden und Empfangen von Informationen bezüglich bei Basisstationen des Verbundes empfangener Symbole über Kommunikationsverbindungen zum Eliminieren von Interferenzen und wobei

c) der Empfänger zum kooperativen und dezentralen Demodulieren und Decodieren von empfangenen Symbolen zusammen mit anderen Basisstationen des Verbundes ausgebildet ist.

### Stand der Technik

Zum Gewährleisten der Mobilität werden bei Mobilfunknetzen Funkverbindungen zwischen Mobilfunkendgeräten bei Mobilfunkteilnehmern und stationären Basisstationen im Mobilfunknetz verwendet. Jede Basisstation deckt ein oder mehrere geografische Gebiete ab, welche auch als Funkzellen bezeichnet werden. Die Basisstationen sind über Festnetz- oder stationäre Richtfunkverbindungen mit Basisstationscontrollern und einem Vermittlungsnetzwerk für Sprachdaten oder andere Daten verbunden. Der Datenverkehr über diese rückwärtigen Verbindungen wird im englischen auch als "Backhaul" bezeichnet.

Zum Übermitteln von Daten zwischen einem Mobilfunkendgerät und einer Basisstation werden die Daten bei dem Mobilfunkendgerät oder der Basisstation auf Trägerfrequenzen moduliert und als Funksignale ausgestrahlt. Im UMTS- (Universal Mobile Telecommunication System) Standard wird beispielsweise eine Quadraturamplitudenmodulation (QAM) verwendet. Bei der QAM werden Amplituden- und Phasenmodulation miteinander kombiniert, indem zwei zueinander orthogonale Schwingungen zunächst amplitude-nmodulie-rt und dann summiert werden. Dazu können z.B. eine Sinus- und eine Cosinusschwingung, also eine um 90° in der Phase verschobene Sinusschwingung verwendet werden. Die Summe stellt die amplituden- und phasenmodulierte Trägerfrequenz dar.

Bei der sogenannten 4-QAM werden die beiden Schwingungen beispielsweise jeweils mit 1 oder -1 als Amplitudenmodulation multipliziert. Es ergeben sich somit vier verschiedene Sendesymbole, welche auch als Signalpunkte bezeichnet werden. Zu einem Zeitpunkt lässt sich auf diese Weise der Wert eines Zwei-Bit-Musters übertragen. Gedanklich wird durch Amplitude und Phase als Polarkoordinaten eine 2-dimensionale Ebene aufgespannt, das sogenannte Konstellationsdiagramm. In diesem Konstellationsdiagramm sind die Signalpunkte als orthogonales Raster angeordnet. Entsprechend stehen bei einer 16-QAM sechzehn und bei einer 256-QAM 256 Symbole zur Verfügung. Hierdurch ist zu einem Zeitpunkt eine Übermittlung von 4 bzw. 8 Bit möglich. Ganz allgemein wird eine Menge verfügbarer Symbole bei einer Modulation auch als Modulationsalphabet bezeichnet. Für eine zu übermittelnde Bitfolge wird aus diesem Modulationsalphabet ein entsprechendes Symbol ausgewählt.

Bedingt durch Rauschen, Interferenzen oder andere Störungen sind empfangene Symbole eines gesendeten Symbols immer mit Fehlern behaftet und streuen mit einer Wahrscheinlichkeitsverteilung um den gesendeten Signalpunkt im Konstellationsdiagramm. Effektive moderne Detektoren und Decodierer ermitteln oft Wahrscheinlichkeitswerte bezüglich empfangener Symbole oder Bits und berücksichtigen diese in folgenden Decodierungsschritten einer iterativen Decodierung. Am Ausgang eines Decoders liegen dann als Wahrscheinlichkeitswerte oder Schätzwerte beispielsweise sogenannten Likelihood-Quotienten oder Log-Likelihood-Quotienten vor. Diese werden im Folgenden auch als L-Werte oder LLR-Werte bezeichnet. Ein dem Fachmann bekanntes Beispiel hierfür ist eine Decodierung von Turbo-Code, welcher in Mobilfunknetzen der dritten Generation (z.B. UMTS) zum Einsatz kommt. Wahrscheinlichkeitswerte bezüglich eines Symbols oder Bits werden üblicherweise auch Soft-Symbole oder Soft-Bits genannt. Im Gegensatz dazu werden die eigentlichen Symbole oder Bits zur besseren Unterscheidung als Hard-Symbole oder Hard-Bits bezeichnet.

Um störende Interferenzen bei einem Empfang von Symbolen zu vermeiden, werden bei benachbarten Basisstationen üblicherweise unterschiedliche Frequenzen eingesetzt. Hierdurch wird ein ohnehin schon limitiertes Spektrum verwendbarer Frequenzen weiter eingeschränkt. Diesem Umstand steht ein exponentiell wachsender Bedarf an breitbandigen Funkverbindungen entgegen. Insbesondere besteht eine große Nachfrage nach schnellen mobilen Verbindungen zum Internet mit entsprechend hohen Datenraten.

Ein technisches Konzept zum Erzielen einer höheren Wiederbenutzung von Frequenzen bei einem Empfang von Daten von Mobilfunkendgeräten durch Basisstationen, dem sogenannten Uplink, und einer Eliminierung dabei entstehender Interferenzen sieht eine zentrale Verarbeitungseinheit für einen Verbund von Basisstationen vor. Bei den Basisstationen empfangene Symbole werden ohne weitere Verarbeitung quantisiert und an die zentrale Verarbeitungseinheit übermittelt. Die zentrale Verarbeitungseinheit führt anschließend eine gemeinsame Verarbeitung und Decodierung der empfangenen Symbole aus. Dabei werden beispielsweise empfangene Symbole benachbarter Basisstationen bei der Verarbeitung von Symbolen einer Basisstation als mögliche Interferenzen berücksichtigt. Dieser Ansatz mit einer zentralen Verarbeitung ist z.B. aus A.D. Wyner, "Shannon-theoretic approach to a Gaussian cellular multiple-access channel", IEEE Transactions on Information Theory, 40(6): 1713-1727, 1994 bekannt. Nachteilig an dieser Vorgehensweise ist neben der kostenträchtigen Einführung neuer zentraler Verarbeitungseinheiten insbesondere der sehr hohe Datentransfer zwischen den Basisstationen und diesen Verarbeitungseinheiten.

Ein weiteres technisches Konzept geht daher von einer dezentralen, kooperativen Verarbeitung empfangener Signale durch die Basisstationen aus, welche hierfür einen Verbund von Basisstationen bilden. Dieses Konzept ist z.B. aus S. Khattak, G. Fettweis, "Distributive iterative detection in interference limited cellular network", Veh. Techn. Conf. Dublin, Proc. VTC Spring 2007 bekannt. Hierbei wird die Demodulation aller empfangenen Symbole über den Verbund von interagierenden Basisstationen verteilt. Jede Basisstation des Verbundes führt dabei lokal Berechnungen bezüglich empfangener Symbole durch und übermittelt Ergebnisse als Information zur weiteren Verarbeitung an benachbarte Basisstationen. Dabei ist auch eine iterative Verarbeitung möglich. Für einen Austausch der Informationen sind Kommunikationsverbindungen und entsprechende Schnittstellen bei den Basisstationen vorgesehen.

Ein ähnliches Verfahren ist im Artikel S. Kattak, et al. "Distributed iterative multi user detection through base station Cooperation", EURASIP journal on Wireless Communications and Networks, beschrieben.

Als auszutauschende Information zwischen den Basisstationen werden z.B. L-Werte zu empfangenen Symbolen verwendet, welche an einem Ausgang eines Detektors oder Decoders bei jeder Basisstation vorliegen. Offensichtlich wird eine sehr hohe Leistungsfähigkeit dann erzielt, wenn alle L-Werte bezüglich empfangener Symbole mit hoher Genauigkeit zwischen den Basisstationen übermittelt werden. Eine diese Informationen empfangende Basisstation verwendet die L-Werte zur Rekonstruktion der bei benachbarten Basisstationen empfangenen Symbole. Anhand der Symbole werden anschließend Störungen durch diese bei empfangenen Symbolen bestimmt und eliminiert. Hierbei ist jedoch nachteilhaft ebenfalls ein sehr großer Datentransfer über die Kommunikationsverbindungen notwendig. Da hierfür üblicherweise Kabelverbindungen von Fremdfirmen gemietet werden, entstehen erhebliche Kosten.

Wenn andererseits aus den L-Werten durch eine sogenannte Hard-Bit-Entscheidung die empfangenen Hard-Bits ermittelt und als Information ausgetauscht werden, führt dies zu einer bedeutend kleineren Datenrate. Da aber die Hard-Bits keinerlei Informationen über eine Zuverlässigkeit mehr enthalten, entstehen bei einer Interferenzrekonstruktion und der Ermittlung von Zuverlässigkeitswerten bei einer Decodierung erhebliche Fehler und somit eine wesentlich geringere Leistungsfähigkeit der verteilten Demodulation.

**Offenbarung der Erfindung**

Aufgabe der Erfindung ist es daher, Nachteile des Standes der Technik zu vermeiden und eine größere Leistungsfähigkeit mit kleinerer Datentransferrate bei einer dezentralen kooperativen Verarbeitung von empfangenen Symbolen in einem Verbund aus Basisstationen zu erzielen.

Erfindungsgemäß wird die Aufgabe bei einem Verfahren der eingangs genannten Art zum Eliminieren von Interferenzen für einen Verbund von Basisstationen eines Mobilfunknetzes bei einem Empfang von Daten, welche von Mobilfunkendgeräten in dem Mobilfunknetz übermittelt werden, dadurch gelöst, dass

d) jeweils ein statistischer Erwartungswert eines empfangenen Symbols bei einer Basisstation des Verbundes ermittelt und als Information zum Eliminieren von Interferenzen übermittelt wird.

Weiterhin wird die Aufgabe mit einer Basisstation der eingangs genannten Art in einem Verbund von Basisstationen eines Mobilfunknetzes zum Eliminieren von Interferenzen beim Empfang von Daten, welche von Mobilfunkendgeräten in dem Mobilfunknetz übermittelt werden, dadurch gelöst, dass

d) ein Ermittlungsmodul zum Ermitteln eines statistischen Erwartungswerts eines empfangenen Symbols vorgesehen ist, wobei der statistische Erwartungswert als Information zum Eliminieren von Interferenzen übermittelt wird.

Der statistische Erwartungswert eines empfangenen Symbols lässt sich als Punkt in einem Konstellationsdiagramm und somit als 2-dimensionaler Wert bzw. Vektor darstellen. Anstatt beispielsweise alle L-Werte eines empfangenen Symbols bezüglich der Symbole eines verwendeten Modulationsalphabets als Information zwischen Basisstationen des Verbundes auszutauschen, werden bei dem erfindungsgemäßen Verfahren und der erfinderischen Basisstation jeweils nur ein statistischer Erwartungswert eines empfangenen Symbols übermittelt. Hierdurch wird eine erhebliche Reduzierung des Datentransfervolumens zwischen den Basisstationen, des sogenannten Backhauls, bei einer kooperativen, verteilten Verarbeitung von empfangenen Symbolen erzielt. Andererseits enthält der statistische Erwartungswert Informationen über eine Zuverlässigkeit empfangener Symbole. Dieses ist bei Bitmustern oder Symbolen, welche bei einer Decodierung aus L-Werten ermittelten werden, nicht mehr gegeben. Daher wird durch Übermitteln von Erwartungswerten anstelle von decodierten Bitmustern oder Symbolen eine Leistungsfähigkeit der kooperativen, dezentralen Demodulation und Decodierung durch einen Verbund von Basisstationen erhöht. Das erfindungsgemäße Verfahren und die erfinderische Basisstation stellen somit eine optimierte Abstimmung zwischen einem Datentransfervolumen und einem Leistungsvermögen bei einem dezentralen kooperativen Empfang von Symbolen durch einen Verbund von Basisstationen dar.

Eine vorteilhafte Ausbildung des erfindungsgemäßen Verfahrens zum Eliminieren von Interferenzen für einen Verbund von Basisstationen eines Mobilfunknetzes bei einem Empfang von Daten wird erzielt durch ein Berechnen des statistischen Erwartungswertes aus Schätzwerten des empfangenen Symbols nach einem ausgewählten Decodierungsschritt des Empfängers der Basisstation. Schätzwerte empfangener Symbole liegen bei neueren, effizienten Decodierungsverfahren beispielsweise als L-Werte nach einem Decodierungsschritt an einem Detektor- oder Decoderausgang vor. Der statistische Erwartungswert eines empfangenen Symbols lässt sich auf diese Weise schnell, ohne größeren Aufwand und unter Nutzung vorhandener Ressourcen aus den vorliegenden Schätzwerten mit Hilfe des Ermittlungsmoduls ermitteln.

Vorzugsweise sind in einer Ausgestaltung des erfindungsgemäßen Verfahrens ein Auswählen eines Symbols des Modulationsalphabets, welches am dichtesten am statistischen Erwartungswert liegt, und ein Übermitteln der diesem Symbol entsprechenden Bits als Quantisierung des statistischen Erwartungswerts vorgesehen. Durch eine solche Quantisierung entspricht das Datentransfervolumen dem günstigen kleinen Datentransfervolumen beim Übermitteln von decodierten Bitmustern. Im Gegensatz zu den decodierten Bitmustern enthalten die als Quantisierung des Erwartungswertes übermittelten Bits jedoch Informationen über eine Zuverlässigkeit empfangener Symbole und ermöglichen eine leistungsfähigere verteilte und kooperative Demodulation und Decodierung. Da der Erwartungswert als Soft-Symbol bei schwächeren Schätzwerten gegen den Ursprung eines Konstellationsdiagrams driftet, unterscheiden sich durch die beschriebene Quantisierung des Erwartungswerts ermittelte Bits von solchen Bits, welche durch eine Decodierung bestimmt werden.

Eine weitere bevorzugte Ausbildung des erfindungsgemäßen Verfahrens wird dadurch erreicht, dass bei einer Basisstation des Verbundes

    a) mit empfangenen Erwartungswerten von anderen Basisstationen des Verbundes die jeweils bei den anderen Basisstationen empfangenen Symbole rekonstruiert werden und

    b) die rekonstruierten Symbole zum Eliminieren von Interferenzen bei einem empfangenen Symbol verwendet werden.

Zur Rekonstruktion der bei anderen Basisstationen empfangenen Symbole durch empfangene Erwartungswerte kann beispielsweise ein Modulator im Empfänger einer Basisstation dienen. Die rekonstruierten Symbole werden als Interferenz interpretiert und z.B. mit Hilfe eines Substrahierers von empfangenen Symbolen subtrahiert. Auf diese Weise wird eine sehr effektive Eliminierung von Interferenzen realisiert, welche durch eine Wiederverwendung von Frequenzen bei einem kooperativen Empfang von Daten mit einem Verbund von Basisstationen entstehen.

Bei einer vorteilhaften Ausgestaltung des erfindungsgemäßen Verfahrens wird iterativ mit empfangenen Erwartungswerten ein neuer Erwartungswert für ein empfangenes Symbol ermittelt und der neue Erwartungswert an andere Basisstationen des Verbundes übermittelt. Durch ein iteratives Vorgehen wird ein sehr leistungsfähiges und dabei über die Basistationen des Verbundes verteiltes und kooperatives Demodulieren und Decodieren von empfangenen Symbolen erreicht. Dabei lässt sich über die Anzahl der Iterationen eine Genauigkeit des Ergebnisses steuern. Ein sehr effektives iteratives Decodieren von empfangenen Symbolen ist nunmehr auch durch einen Verbund von Basisstationen kooperativ durchführbar.

Ferner ist in einer vorteilhaften Weiterbildung des erfindungsgemäßen Verfahrens vorgesehen, dass mit einer Wahrscheinlichkeitsverteilung für empfangene Symbole Rekonstruktionsniveaus der Quantisierung des statistischen Erwartungswerts optimiert werden. Eine Quantisierung des statistischen Erwartungswerts verursacht einen unvermeidbaren Informationsverlust bei der dezentralen kooperativen Verarbeitung von empfangenen Symbolen durch einen Verbund von Basisstationen. Hierdurch entstehende Quantisierungsfehler setzten sich besonders bei einer iterativen Signalverarbeitung fort und wirken sich negativ auf den gesamten Signalverarbeitungsprozess aus. Je nach einer Wahrscheinlichkeitsverteilung der empfangenen Symbole treten bei einer Quantisierung von Erwartungswerten Bitmuster in unterschiedlicher Häufigkeit auf. Durch ein geeignetes Quantisierungsverfahren lassen sich deshalb Rekonstruktionsniveaus in der Weise optimieren, dass ein Informationsverlust und damit Quantisierungsfehler reduziert werden. Dieses wirkt sich vorteilhaft auf die dezentrale kooperative Verarbeitung von empfangenen Symbolen aus. Eine Quantisierung kann beispielsweise mit Hilfe eine Lloyd-Max-Quantisierung nach S. Lloyd, "Least squares quantization in PCM", (unpubl. Bell Lab. Techn. Note, 1957) IEEE Trans. Inf. Theory, vol. IT-28, pp. 129 -137, 1982 und J. Max, "Quantizing for minimum distortion", IEEE Trans. Inf. Theory, vol. 6, pp. 7-12, 1960, erfolgen. Bei dieser Quantisierung wird der mittlere quadratische Fehler zwischen den Wahrscheinlichkeitsdichten kontinuierlicher und quantisierter Werte durch eine Anpassung der Rekonstruktionsniveaus minimiert.

Eine vorteilhafte Ausbildung der erfindungsgemäßen Basisstation in einem Verbund von Basisstationen eines Mobilfunknetzes zum Eliminieren von Interferenzen beim Empfang von Daten sieht ein Quantisierungsmodul vor, welches ein am dichtesten am statistischen Erwartungswert liegendes Symbol des Modulationsalphabets auswählt und diesem Symbol entsprechende Bits als Quantisierung des statistischen Erwartungswerts für eine Übermittlung bereitstellt. Hierdurch entspricht das Datentransfervolumen dem günstigen kleinen Datentransfervolumen beim Übermitteln von decodierten Bitmustern. Dabei enthalten die als Quantisierung des Erwartungswertes übermittelten Bits zusätzlich Informationen über eine Zuverlässigkeit empfangener Symbole und ermöglichen daher eine leistungsfähigere verteilte und kooperative Demodulation und Decodierung empfangener Symbole.

Eine weitere bevorzugte Ausgestaltung der erfindungsgemäßen Basisstation wird dadurch erzielt, dass eine Optimierungseinheit zum Optimieren von Rekonstruktionsniveaus der Quantisierung des statistischen Erwartungswerts jeweils nach einer Wahrscheinlichkeitsverteilung empfangener Symbole vorgesehen ist. Dabei kann beispielsweise von der Optimierungseinheit eine Lloyd-Max-Quantisierung verwendet werden. Wie bei der korrespondierenden Ausbildung des erfinderischen Verfahrens werden bei dieser Ausgestaltung Quantisierungsfehler und damit ein Informationsverlust bei einer Quantisierung reduziert. Dies steigert die Performance der dezentralen kooperativen Verarbeitung von empfangenen Symbolen durch einen Verbund von Basisstationen.

Weitere Ausgestaltungen und Vorteile ergeben sich aus dem Gegenstand der Unteransprüche, sowie der Zeichnungen mit der dazugehörigen Beschreibung.

Ein Ausführungsbeispiel der Erfindung ist nachstehend unter Bezugnahme auf die zugehörigen Zeichnungen näher erläutert.

## Kurze Beschreibung der Zeichnungen

Fig. 1   zeigt in einer schematischen Prinzipskizze einen Verbund von Basisstationen in einem Mobilfunknetz für einen dezentralen und kooperativen Empfang von Daten, welche von Mobilfunkendgeräten übermittelt werden.

Fig. 2   zeigt in einer schematischen Prinzipskizze einen Empfänger einer Basisstation für den dezentralen und kooperativen Empfang von Daten nach Fig. 1

Fig. 3   zeigt in einem Konstellationsdiagramm verschiedene bei einer Basisstation rekonstruierte Symbole.

Fig. 4   zeigt eine Verschiebung eines Erwartungswertes als Soft-Symbol in einem Konstellationsdiagramm bei einer 16-QAM mit Gray-Codierung, wenn sich eine Zuverlässigkeit von L-Werten ändert.

Fig. 5   zeigt als eine Funktion der Varianz von L-Werten die Wahrscheinlichkeit dafür auf, dass ein Soft-Symbol bzw. Erwartungswert jeweils innerhalb einer Voronoi-Region um verschiedene Konstellationspunkte einer 16-QAM mit Gray-Codierung liegt.

Fig. 6   zeigt in einem Diagramm optimierte Rekonstruktionsniveaus als Funktion der Varianz der L-Werte für verschiedene, übermittelte Bits innerhalb einer Konstellation einer 16-QAM.

Fig. 7   zeigt in einem Diagramm Fehlerraten in einem Verbund mit vier Basisstationen und vier Mobilfunkendgeräten als Ergebnis einer numerischen Simulation.

## Bevorzugtes Ausführungsbeispiel

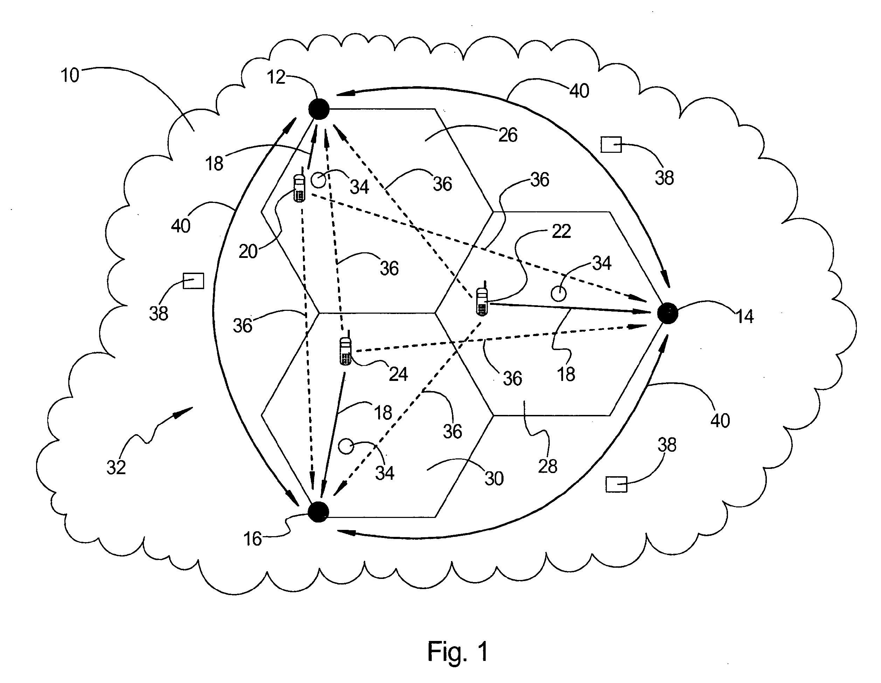

In Fig. 1 wird mit 10 ein öffentliches, zellulares Mobilfunknetz zur mobilen Kommunikation und Inanspruchnahme von Diensten bezeichnet. Das Mobilfunknetz 10 kann im Wesentlichen beispielweise nach dem UMTS-, HSPA- (High Speed Packet Access), LTE/SAE- (Long Term Evolution / Service Architecture Evolution) Standard oder einem anderen Standard der dritten oder vierten Generation ausgebildet sein. Dem Fachmann sind solche Mobilfunknetze mit den entsprechenden Bestandteilen geläufig. Der Einfachheit halber wird das Mobilfunknetz 10 daher nur durch eine Wolke stilisiert dargestellt.

Das Mobilfunknetz 10 enthält stationäre Basisstationen 12, 14, 16, um Funkverbindungen 18 zu Mobilfunkendgeräten 20, 22, 24 herzustellen. Auf diese Weise wird eine Mobilität für Mobilfunkteilnehmer bei einer Benutzung der Mobilfunkendgeräte 20, 22, 24 realisiert. Die Basisstationen 12, 14, 16 spannen dabei Funkzellen 26, 28, 30 als geographische Abdeckungsbereiche auf. Die Funkzellen 26, 28, 30 werden in Fig. 1 als Sechsecke symbolisiert dargestellt. Reale Funkzellen können beispielsweise je nach Gelände- und Umwelteinflüsse oder einer dynamischen Anpassung einer Sendeleistung sehr unterschiedliche Formen annehmen. Je nach Funkzelle 26, 28, 30, in der sich ein Mobilfunkendgerät 20, 22, 24 aufhält, wird es üblicherweise der entsprechenden Basisstation 12, 14, 16 zum Austausch von Daten zugeordnet.

Zusätzlich bilden die Basisstationen 12, 14, 16 einen Verbund 32 von Basisstationen zum dezentralen und kooperativen Empfang von Daten 34, welche von den Mobilfunkendgeräten 20, 22, 24 übermittelt werden. Die Mobilfunkendgeräte 20, 22, 24 verwenden vorzugsweise gleiche Funkfrequenzen um eine hohe Wiederbenutzung von Frequenzen innerhalb eines vorgegebenen, beschränkten Frequenzspektrums zu erzielen. Dabei entstehende und in Fig. 1 als gestrichelte Pfeile dargestellte Interferenzen 36 werden durch einen Austausch von Informationen 38 über empfangene Signale zwischen den Basisstationen 20, 22, 24 eliminiert. Dazu findet eine iterative Verarbeitung von empfangenen Signalen statt. Diese Vorgehensweise wird daher auch als verteilte, iterative Mehrbenutzer-Detektion durch eine Kooperation von Basisstationen bezeichnet.

Zur Übermittlung der Informationen 38 über empfangene Signale sind zwischen den Basisstationen 12, 14, 16 Kommunikationsverbindungen 40 vorgesehen. Die Kommunikationsverbindungen 40 sind vorzugsweise als kabelgebundene Verbindungen oder stationäre Richtfunkverbindungen ausgebildet und können direkt zwischen den Basisstationen 12, 14, 16 oder über andere Komponenten des Mobilfunknetzes 10, wie beispielsweise Basisstationskontrolleinheiten (BSC: Base Station Controller oder RNC: Radio Network Controller) realisiert werden.

Statt dem in Fig. 1 beispielhaft dargestellten Verbund 32 von drei Basisstationen 12, 14, 16 ist auch ein Verbund von zwei oder mehr als drei benachbarten Basisstationen möglich. Weiterhin können in dem Mobilfunknetz 10 mehrere Verbunde 34 von Basisstationen vorgesehen sein, wobei eine Basisstation 12, 14, 16 auch gleichzeitig Mitglied von mehreren Verbunden 34 sein kann. Verbunde 34 von Basisstationen 12, 14, 16 können statisch oder dynamisch, beispielsweise je nach einem Teilnehmeraufkommen, in dem Mobilfunknetz 10 vorgesehen werden.

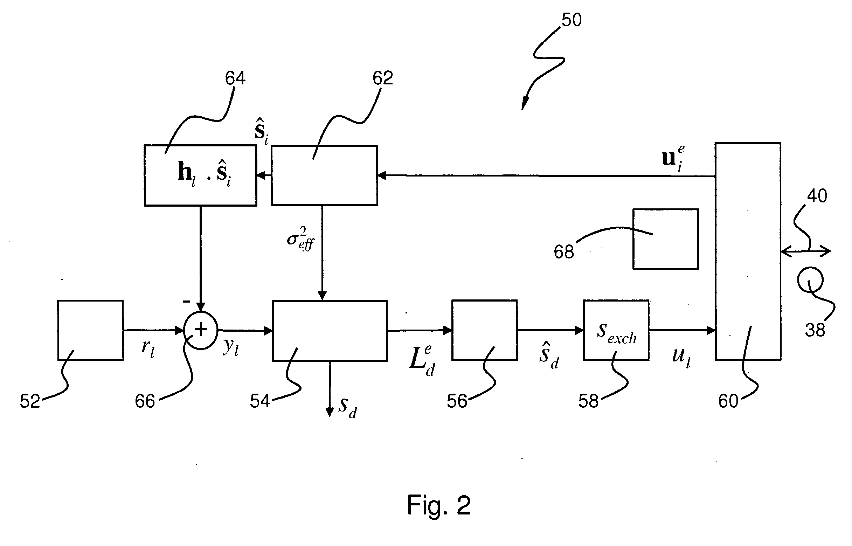

In Fig. 2 wird in einem schematischen Blockdiagramm ein Empfänger 50 dargestellt, welcher jeweils in den Basisstation 12, 14, 16 (s. Fig. 1) für den dezentralen und kooperativen Empfang von Daten 34 vorgesehen ist. Der Empfänger 50 enthält eine Eingangseinheit 52 für von einer Antenne empfangene Signale und eine Detektor- und Decodierungseinheit 54 zum iterativen Decodieren der empfangenen Signale bzw. Symbole. Weiterhin sind im Empfänger 50 ein Ermittlungsmodul 56 zum Ermitteln eines statistischen Erwartungswertes eines empfangenen Symbols aus Schätzwerten bezüglich empfangener Symbole und ein Quantisierungsmodul 58 zum Quantisieren bzw. Digitalisieren des ermittelten Erwartungswertes für eine Übermittlung an andere Basisstationen 12, 14, 16 vorgesehen. Die Übermittlung erfolgt über eine Schnittstelle 60 und den Kommunikationsverbindungen 40. Über die Schnittstelle 60 ist ferner ein Empfang von entsprechenden Erwartungswerten anderer Basisstationen 12, 14, 16 des Verbundes 32 möglich. Diese Erwartungswerte dienen als Information 38 über die jeweils bei den anderen Basisstationen 12, 14, 16 empfangenen Symbole. Mit einem Modulator 62 zur Rekonstruktion von Symbolen aus empfangenen Informationen 38, Mittel 64 zur Berücksichtigung von Kanaleigenschaften, wie beispielsweise Pfadverluste, und einem Subtrahierer 66 werden bei den anderen Basisstationen 12, 14, 16 empfangene Symbole als Interferenz aus empfangenen Symbolen eliminiert. Das Ermittlungsmodul 56, das Quantisierungsmodul 58, die Schnittstelle 60, der Modulator 62, die Mittel 64 und der Subtrahierer 66 sind in diesem Ausführungsbeispiel im Empfänger 50 vorgesehen. In alternativen Ausführungen können einige dieser Komponenten teilweise oder komplett außerhalb des Empfängers 50 in der jeweiligen Basisstation 12, 14, 16 oder in anderen Komponenten des Empfängers 50 vorgesehen sein. Ferner kann ein Optimierungsmodul 68 zur Optimierung von Rekonstruktionsniveaus bei einer Quantisierung von Erwartungswerten eingesetzt werden.

Im Folgenden werden Funktionsweise der Basisstationen 12, 14, 16 mit den Empfängern 50 zusammen mit einem beispielhaften Verfahren zum iterativen, dezentralen und kooperativen Empfang von Daten 34 anhand von Fig. 1, Fig. 2 und Fig. 3 beschrieben. Dazu wird exemplarisch eine Basisstation 12, 14, 16 des Verbundes 32 ausgewählt und als *l*-te Basisstation bezeichnet. In Fig. 2 wird dieser Umstand durch einen unteren Index *l* verdeutlicht. Der untere Index *d* bezeichnet einen erwünschten Datenstrom und der Index *i* einen dominanten interferierenden Datenstrom. Mit einem oberen Index *e* werden extrinsische bzw. a-posteriori-Wahrscheinlichkeitsinformationen bezeichnet.

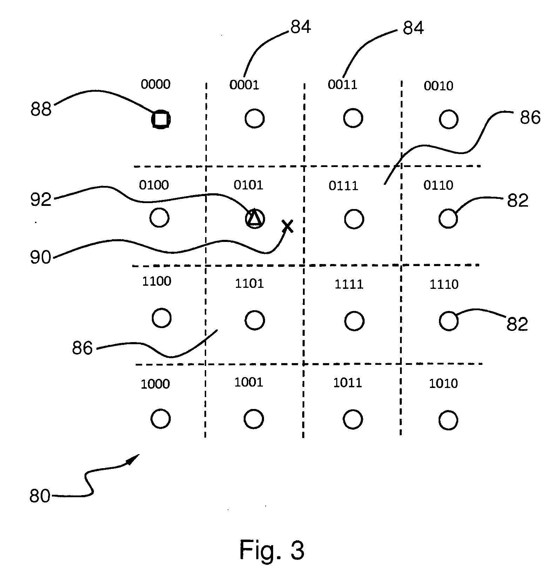

Die aktiven Mobilfunkendgeräte 20, 22, 24 in dem Mobilfunknetz 10 sind jeweils einer Basisstation 12, 14, 16 zugeordnet (s. Pfeile 18 in Fig. 1). Für eine Übertragung von Daten 34 von einem Mobilfunkendgerät 20, 22, 24 an die zugeordnete Basisstation 12, 14, 16 über eine Verbindung 18, einem sogenannten Uplink, werden die Daten 34 als Symbole auf eine Trägerfrequenz moduliert und von dem Mobilfunkendgerät 20, 22, 24 ausgestrahlt. Die Symbole werden dabei je nach zu übermittelnden Bitmustern aus einer zur Verfügung stehenden Menge von Symbolen ausgewählt. Diese Menge von Symbolen wird auch als Modulationsalphabet bezeichnet. Beispielsweise wird bei einer Quadratur-Amplituden-Modulation mit sechzehn Symbolen (16-QAM) pro Symbol eine Bitfolge mit vier Bits übermittelt. Die Symbole der 16-QAM lassen sich in einem Konstellationsdiagramm (s. Fig. 3) darstellen. Zur Fehlerkorrektur unterscheiden sich Bitfolgen benachbarter Symbole nur durch ein Bit. Eine solche Codierung wird als Gray-Codierung bezeichnet.

Eine Antenne bei der *l*-ten Basisstation 12, 14, 16 empfängt die Symbole von dem zugeordneten Mobilfunkendgerät 20, 22, 24 mit Störungen. Neben einem Rauschen treten insbesondere Interferenzen 36 durch sendende Mobilfunkendgeräte 20, 22, 24 in benachbarten Funkzellen 26, 28, 30 auf. Solche Interferenzen werden auch als OCI (Other Cell Interference) bezeichnet und treten z.B. durch eine Wiederbenutzung von Frequenzen auf. Empfangene Signale bzw. Symbole $r_l$ werden an die Eingangseinheit 52 des Empfängers 50 weitergeleitet.

In einem ersten Schritt werden die empfangenen Symbole $r_l$ von der Eingangseinheit 52 direkt an die Detektor- und Decodierungseinheit 54 übergeben. Die Detektor- und Decodierungseinheit 54 führt eine erste herkömmliche Einzelnutzer-Detektion und Einzelnutzer-Decodierung durch, wobei interferierende Symbole von anderen Mobilfunkendgeräten 20, 22, 24 als Störung behandelt werden. Danach liegen an einem Ausgang der Detektor- und Decodierungseinheit 54 Likelihood-Quotienten $L^e_d$ als Schätzwerte für übermittelte Symbole vor. Diese Likelihood-Quotienten $L^e_d$ verwendet anschließend das Ermittlungsmodul 56 zum Ermitteln eines Erwartungswerts $\hat{s}_d$ für ein übermitteltes Symbol. Der Erwartungswert $\hat{s}_d$ folgt beispielsweise aus:

$$\hat{s}_d = E\{S_d | L^e_d\} = \sum_{s_k \in A} s_k\, p\left(S_d = s_k | L^e_d\right)$$

Hierbei wird mit *A* ein Modulationsalphabet, mit $s_k$ ein Symbol des Modulationsalphabets und mit $S_d$ ein empfangenes Symbol als Zufallsvariable bezeichnet. Der statistische Erwartungswert $\hat{s}_d$ wird im Folgenden auch Soft-Symbol oder Soft-Symbol-Schätzung genannt.

Das Soft-Symbol $\hat{s}_d$ wird mit dem Quantisierungsmodul 58 für eine Übermittlung an andere Basisstationen 12, 14, 16 quantisiert und digitalisiert. Dazu wird zunächst das Symbol $s_{exch}$ des Modulationsalphabets bestimmt, welches am dichtesten am Soft-Symbol $\hat{s}_d$ liegt:

$$s_{exch} = \arg\min_{s_k \in A}\ |\hat{s}_d - s_k|$$

Eine solche Entscheidung für ein Hard-Symbol $s_{exch}$ wird als Hard-Symbol-Entscheidung oder engl. Hard-Symbol-Decision bezeichnet. Die diesem Hard-Symbol $s_{exch}$ entsprechende Bitfolge $u_l$ wird über die Schnittstelle 60 und die Kommunikationsverbindungen 40 als auszutauschende Information 38 an andere Basisstationen 12, 14, 16 übermittelt.

Diese Vorgehensweise wird in Fig. 3 anhand eines Konstellationsdiagramms 80 anschaulich dargestellt. In dem Konstellationsdiagramm 80 sind alle Symbole bzw. Konstellationspunkte einer 16-QAM mit Gray-Codierung als Kreise 82 dargestellt. Über den Konstellationspunkten 82 sind entsprechend einer Gray-Codierung zugeordnete Bitfolgen 84 aufgezeigt. Benachbarte Bitfolgen 84 unterscheiden sich nur durch ein Bit. Um die Konstellationspunkte 82 werden zugehörige Voronoi-Regionen 86 mit Hilfe gestrichelter Linien veranschaulicht. Eine Hard-Bit-Entscheidung direkt aus den Likelihood-Quotienten $L^e_d$ würde beispielsweise zu dem als Quadrat dargestellten Symbol 88 mit der Bitfolge 0000 führen. Der in diesem Beispiel aus den Likelihood-Quotienten $L^e_d$ ermittelte Erwartungswert $\hat{s}_d$ wird in Fig. 3 als Kreuz 90 aufgezeigt. Das am dichtesten an dem Erwartungswert $\hat{s}_d$ liegende Symbol $s_{exch}$ ist mit einem Dreieck 92 gekennzeichnet. Die zugeordnete Bitfolge 0101 wird als Information 38 (s. Fig. 2) an andere Basisstationen 12, 14, 16 (s. Fig. 1) übermittelt. Dabei enthält die Bitfolge 0101 gegenüber der Bitfolge 0000 (direkte Hard-Bit-Entscheidung aus den Likelihood-Quotienten $L^e_d$) bei gleichem Datenvolumen vorteilhaft Wahrscheinlichkeitsinformationen über ein empfangenes Symbol und ermöglicht so einen effektiveren dezentralen und kooperativen Empfang von Symbolen durch den Verbund 32 von Basisstationen.

Von den anderen Basisstationen 14, 16, 18 des Verbundes 32 empfängt die *l*-te Basisstation 14, 16, 18 über die Kommunikationsverbindungen 40 und die Schnittstelle 60 entsprechend Bitfolgen $\mathbf{u}^{\epsilon}_i$ bezüglich ermittelter Erwartungswerte $\hat{s}_i$ (s. Fig. 2). Mit fetten Buchstaben werden Vektoren bezeichnet. Der Modulator 62 rekonstruiert aus den Bitfolgen $\mathbf{u}^{\epsilon}_i$ die entsprechenden Erwartungswerte $\hat{\mathbf{s}}_i$ bzw. am dichtesten an den $\hat{\mathbf{s}}_i$ liegende Symbole $\mathbf{s}_{i,exch}$ als Erwartungswerte $\mathbf{s}_i$. Diese Erwartungswerte $\hat{\mathbf{s}}_i$ werden nachfolgend als störende Interferenz aus dem empfangenen Signal eliminiert. Dazu werden Kanaleigenschaften $\mathbf{h}_l$, z.B. Pfadverluste, bei einer Rekonstruktion durch die Mittel 64 berücksichtigt. Eine auf diese Weise ermittelte Energie von interferierenden Symbolen $\mathbf{h}_l \cdot \hat{\mathbf{s}}_i$ wird mit dem Subtrahierer 66 von dem empfangenen Signal $r_l$ subtrahiert. Als Ergebnis liegt nach einer solchen Eliminierung von Interferenzen ein interferenzreduziertes Signal $y_l$ vor:

$$y_l = r_l - \mathbf{h}_i \cdot \hat{s}_i = r_l - \sum_{\forall i \neq l} h_{li} \hat{s}_i$$

Das Signal $y_l$ wird an die Detektor- und Decodierungseinheit 54 übergeben. Nach einer Einzelnutzer-Detektion und -Decodierung liegen dann wesentlich genauere Likelihood-Quotienten $L^e{}_d$ vor, aus denen wiederum ein genauerer Erwartungswert $\hat{s}_d$ ermittelt und an andere Basisstationen 12, 14, 16 des Verbundes 32 übermittelt wird. In jeder folgenden Iteration des Verfahrens erfolgt zunächst die oben beschrieben Subtraktion von Interferenzen und anschließend eine Einzelnutzer-Detektion und -Decodierung für empfangende Symbole. Schließlich liegt das erwünschte Symbol $s_d$ trotz Interferenzen durch eine Wiederverwendung von Frequenzen mit einer geringen Fehlerrate vor.

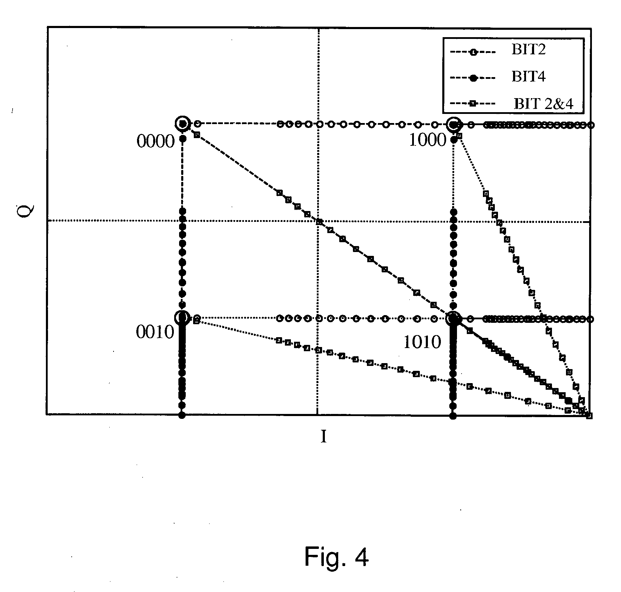

Fig. 4 zeigt eine Verschiebung eines Erwartungswertes als Soft-Symbol in einem Konstellationsdiagramm bei einer 16-QAM mit Gray-Codierung, wenn sich eine Zuverlässigkeit von Schätzwerten ändert. Dazu wird der Betrag der Log-Likelihood-Quotienten von $\infty$ bis 0 variiert und das 2. Bit und 4. Bit einer dem Soft-Symbol zugeordneten Bitfolge betrachtet. Die Wahrscheinlichkeit eines rekonstruierten Soft-Symbols ändert sich wie in Fig. 4 dargestellt, indem viele der rekonstruierten Soft-Symbole sich zum Ursprung des Konstellationsdiagramms (rechts unten) verschieben. Mit I wird bei einer QAM eine Trägerschwingung "In-Phase" und mit Q eine Trägerschwingung mit "Quadratur", d.h. in der Phase um 90° verschoben, bezeichnet.

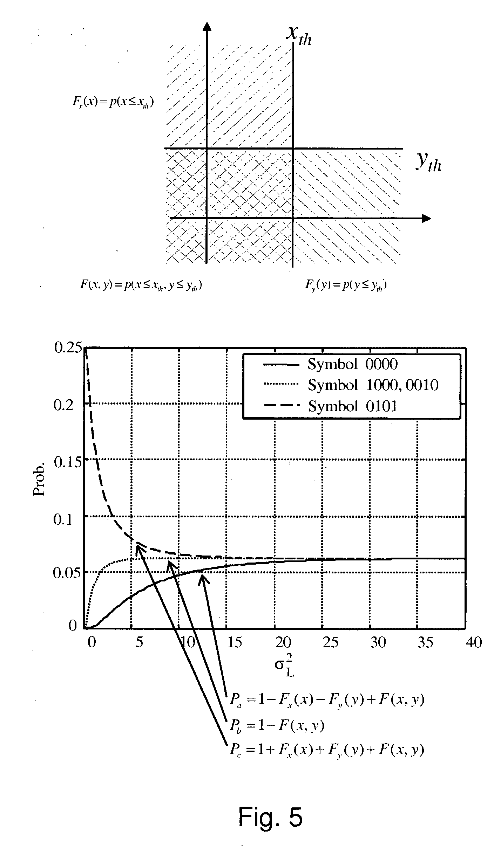

Mit einer bekannten Wahrscheinlichkeitsverteilung von rekonstruierten Soft-Symbolen $\hat{s}_d$ ist eine weitere Steigerung der Leistungsfähigkeit des dezentralen kooperativen Empfangs mit dem Verbund 32 von Basisstationen durch eine Optimierung von Rekonstruktionsniveaus möglich. In Fig. 5 werden Wahrscheinlichkeiten für verschiedene Soft-Symbole als Funktion der Varianz $\sigma_L^2$ von Log-Likelihood-Quotienten dargestellt. Dabei wird eine bimodale Gauß-Verteilung angenommen. Die Soft-Symbole liegen in Voronoi-Region um verschiedene Konstellationspunkte einer 16-QAM mit Gray-Codierung. Je nach Wahrscheinlichkeitsverteilung der rekonstruierten Soft-Symbole treten bei einer Quantisierung Bitfolgen in unterschiedlicher Häufigkeit auf. Durch die Gray-Codierung haben hierbei auch einzelne Bits einer Bitfolge eine unterschiedliche Wahrscheinlichkeit.

Bei Kenntnis der Wahrscheinlichkeitsverteilung von Likelihood-Quotienten für jedes Bit innerhalb einer Voronoi-Region lassen sich daher optimale Rekonstruktionsniveaus als Funktion der Varianz der Likelihood-Quotienten bestimmen. Eine Optimierung erfolgt in der Weise, dass ein Informationsverlust bei einer Quantisierung reduziert wird. Dazu kann die Optimierungseinheit 68 z.B. eine Lloyd-Max-Quantisierung nach S. Lloyd, "Least squares quantization in PCM", (unpubl. Bell Lab. Techn. Note, 1957) IEEE Trans. Inf. Theory, vol. IT-28, pp. 129 -137, 1982 und J. Max, "Quantizing for minimum distortion", IEEE Trans. Inf. Theory, vol. 6, pp. 7-12, 1960 durchführen. Bei dieser Quantisierung wird der mittlere quadratische Fehler zwischen den Wahrscheinlichkeitsdichten kontinuierlicher und quantisierter Werte durch eine Anpassung der Rekonstruktionsniveaus minimiert. Auch eine sogenannte "Lloyd-Max-Quantisierung in der Soft-Bit-Domäne" nach S. Khattak, W. Rave and G. Fettweis, "Distributed Iterative Multiuser Detection through Base Station Cooperation", EURASIP J. on Wireless Comm. and Networking Volume 2008, Article ID 390489 ist möglich.

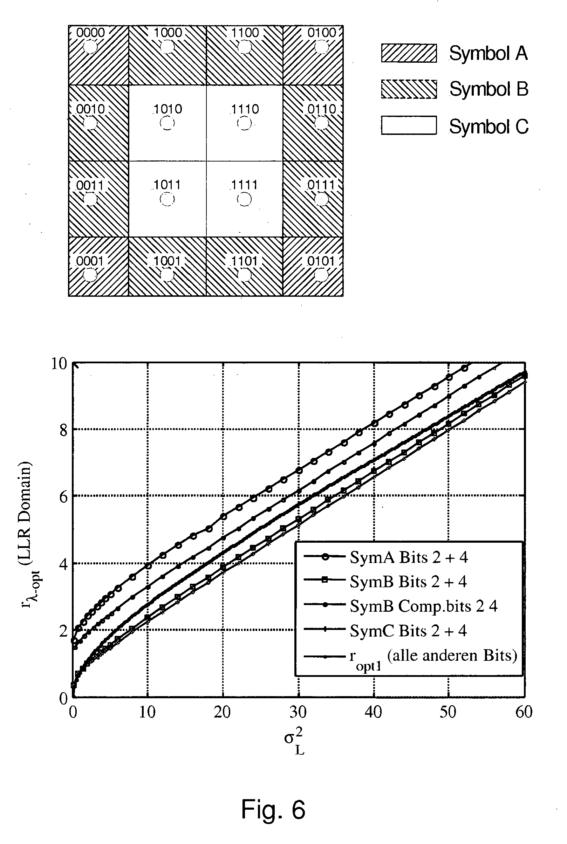

Optimierte Rekonstruktionsniveaus können hierzu als Funktion der Varianz $\sigma_L^2$ von Log-Likelihood-Quotienten zuvor berechnet werden und bei einem Empfang von Hard-Bits je nach Bitfolge von einer Basisstation 12, 14, 16 verwendet werden. In Fig. 6 werden optimierte Rekonstruktionsniveaus für Bits von verschiedenen Symbolen aufgezeigt, welche durch eine Anwendung einer Lloyd-Max-Quantisierung in der Soft-Bit-Domäne ermittelt wurden. Die Varianz $\sigma_L^2$ wird durch den Modulator 62, (s. Fig. 2) bestimmt und zur Verfügung gestellt.

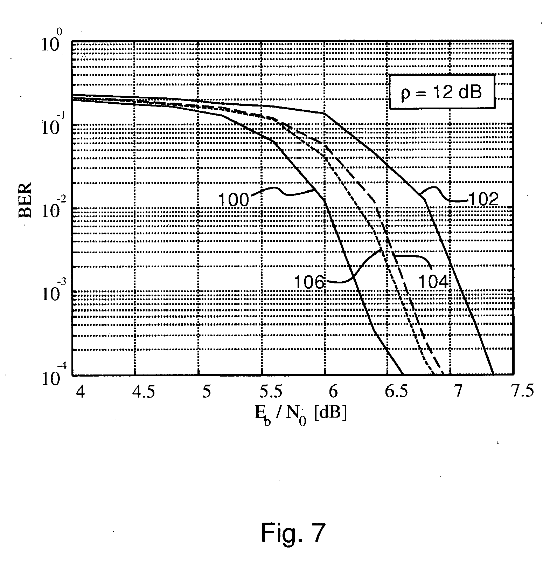

In Fig. 7 werden Bitfehlerraten (BER: bit error rate) für verschiedene ausgetauschte Informationen bei einem dezentralen und kooperativen Empfang von Daten durch einen Verbund von Basistationen in einem Diagramm dargestellt. Die Bitfehlerrate wird als Funktion des Bitenergie-Rauschleistungsdichte-Verhältnisses $E_b/N_0$ dargestellt. Das Verhältnis von der für ein Informationsbit aufgewendete Energie $E_b$ zu der spektralen Rauschleistungsdicht $N_0$ bezieht das Signal-Rauschverhältnis auf ein Informationsbit. Mit steigendem Rauschen, d.h. abnehmendem $E_b/N_0$ steigt üblicherweise die Bitfehlerrate. Die in Fig. 7 dargestellten Bitfehlerraten wurden durch eine nummerische Simulation von vier übermittelnden Mobilfunkendgeräten in einem Verbund von vier Basisstationen mit entsprechenden Funkzellen berechnet. Dabei wurden u.a. folgende Merkmale angenommen bzw. verwendet: IID Rayleigh Kanal, Codewort = 512 Symbole, 16-QAM Modulation mit Gray-Codierung, ½ Rate PCCC Codierung und relativer Pfadverlust $\rho$ = 12 dB.

Ein Austausch von Likelihood-Quotienten als Soft-Information zwischen den Basisstationen, durchgehende Kurve 100, führt zu einer sehr niedrigen Bitfehlerrate aber auch zu einem sehr großen Datentransfervolumen (engl. Backhaul). Alle Likelihood-Quotienten müssen mit ausreichender Genauigkeit zwischen den Basisstationen übermittelt werden. Ein Austausch von Likelihood-Quotienten kann daher als obere Grenze für eine Leistungsfähigkeit eines dezentralen und kooperativen Empfangs von Daten durch einen Verbund von Basisstationen angesehen werden.

Andererseits führt ein Austausch von Hard-Bits, durchgehende Kurve 102, welche direkt aus den Likelihood-Quotienten mit einer Hard-Bit-Entscheidung bestimmt werden (s. Fig. 3, 88) zu einem sehr kleinen Datentransfervolumen aber einer hohen Bitfehlerrate. Die Hard-Bits enthalten, wie oben beschrieben, keinerlei Zuverlässigkeitsinformation mehr. Hierdurch wird nur eine geringe Leistungsfähigkeit bei dem dezentralen und kooperativen Empfang durch einen Verbund von Basisstationen erzielt. Ein solcher Austausch von Hard-Bits kann daher als untere Grenze für die Leistungsfähigkeit des Verbundes von Basisstationen angesehen werden.

Ein Austausch von statischen Erwartungswerten als Bitfolge einer Hard-Symbol-Entscheidung nach dem oben beschriebenen Verfahren und den Basisstationen 12, 14, 16, ergibt als Bitfehlerrate die gestrichelte Kurve 104. Ausgehend von der Kurve 100 wird gegenüber dem Austausch von Hard-Bits (Kurve 102) die Bitfehlerrate um etwa die Hälfte reduziert. Dabei entspricht das Datentransfervolumen dem des Hard-Bit-Austausches. Bei gleichem, kleinem Datentransfervolumen wird daher mit dem beschriebenen Verfahren und den Basisstationen 12, 14, 16 eine wesentlich Steigerung der Leistungsfähigkeit des dezentralen kooperativen Empfangs erzielt. Dabei sind für einen Empfang und eine Rekonstruktion von Erwartungswerten und für eine Subtraktion von Interferenzen gegenüber einem Austausch einer Hard-Bit-Entscheidung vorteilhaft keine zusätzlichen Verfahrensschritte oder Komponenten bei einer Basisstation notwendig.

Eine weitere Verbesserung der Bitfehlerrate und somit eine Steigerung der Leistungsfähigkeit wird durch eine oben beschriebene Optimierung von Rekonstruktionsniveaus bei einer Übermittlung von statistischen Erwartungswerten ermöglicht, gestrichelte Kurve 106.

## Patentansprüche

1. Verfahren zum Eliminieren von Interferenzen (36) für einen Verbund (32) von Basisstationen (12, 14, 16) eines Mobilfunknetzes (10) bei einem Empfang von Daten (34), welche von Mobilfunkendgeräten (20, 22, 24) in dem Mobilfunknetz (10) übermittelt werden, wobei

    a) die Daten (34) bei einem Mobilfunkendgerät (20, 22, 24) als Symbole eines Modulationsalphabets codiert und auf eine Trägerfrequenz zur Übermittlung moduliert werden,
    b) Informationen (38) bezüglich der bei Basisstationen (12, 14, 16) des Verbundes (32) empfangenen Symbole zwischen den Basisstationen (12, 14, 16) über Kommunikationsverbindungen (40) zum Eliminieren von Interferenzen (36) übermittelt werden und
    c) die Basisstationen (12, 14, 16) des Verbundes (32) empfangene Symbole kooperativ und dezentral demodulieren und decodieren,

**dadurch gekennzeichnet, dass**
    d) jeweils ein statistischer Erwartungswert eines empfangenen Symbols bei einer Basisstation (12, 14, 16) des Verbundes (32) ermittelt und als Information (38) zum Eliminieren von Interferenzen (36) an die restlichen Basisstationen des Verbundes übermittelt wird.

2. Verfahren zum Eliminieren von Interferenzen (36) für einen Verbund (32) von Basisstationen (12, 14, 16) eines Mobilfunknetzes (10) bei einem Empfang von Daten (34) nach Anspruch 1, **gekennzeichnet durch** ein Berechnen des statistischen Erwartungswertes aus Schätzwerten des empfangenen Symbols nach einem ausgewählten Decodierungsschritt eines Empfängers (50) der Basisstation (12, 14, 16).

3. Verfahren zum Eliminieren von Interferenzen (36) für einen Verbund (32) von Basisstationen (12, 14, 16) eines Mobilfunknetzes (10) bei einem Empfang von Daten (34) nach Anspruch 1 oder 2, **gekennzeichnet durch** Auswählen eines Symbols des Modulationsalphabets, welches am dichtesten am statistischen Erwartungswert liegt, und Übermitteln der diesem Symbol entsprechenden Bits als Quantisierung des statistischen Erwartungswerts.

4. Verfahren zum Eliminieren von Interferenzen (36) für einen Verbund (32) von Basisstationen (12, 14, 16) eines Mobilfunknetzes (10) bei einem Empfang von Daten (34) nach einem der Ansprüche 1 bis 3, **dadurch gekennzeichnet, dass** bei einer Basisstation des Verbundes

    a) mit empfangenen Erwartungswerten von anderen Basisstationen (12, 14, 16) des Verbundes (32) die jeweils bei den anderen Basisstationen (12, 14, 16) empfangenen Symbole rekonstruiert werden und
    b) die rekonstruierten Symbole zum Eliminieren von Interferenzen (36) bei einem empfangenen Symbol verwendet werden.

5. Verfahren zum Eliminieren von Interferenzen (36) für einen Verbund (32) von Basisstationen (12, 14, 16) eines Mobilfunknetzes (10) bei einem Empfang von Daten (34) nach einem der Ansprüche 1 bis 4, **dadurch gekennzeichnet, dass** iterativ mit empfangenen Erwartungswerten ein neuer Erwartungswert für ein empfangenes Symbol ermittelt und der neue Erwartungswert an andere Basisstationen (12, 14, 16) des Verbundes (32) übermittelt wird.

6. Verfahren zum Eliminieren von Interferenzen (36) für einen Verbund (32) von Basisstationen (12, 14, 16) eines Mobilfunknetzes (10) bei einem Empfang von Daten (34) nach einem der Ansprüche 1 bis 5, **dadurch gekennzeichnet, dass** mit einer Wahrscheinlichkeitsverteilung für empfangene Symbole Rekonstruktionsniveaus der Quantisierung des statistischen Erwartungswerts optimiert werden.

7. Basisstation (12, 14, 16) in einem Verbund (32) von Basisstationen (12, 14, 16) eines Mobilfunknetzes (10) zum Eliminieren von Interferenzen (36) beim Empfang von Daten (34), welche von Mobilfünkendgeräten (20, 22, 24) in dem Mobilfunknetz (10) übermittelt werden, enthaltend

a) einen Empfänger (50) zum Empfangen der Daten (34), welche bei einem Mobilfunkendgerät (20, 22, 24) als Symbole eines Modulationsalphabets codiert und auf eine Trägerfrequenz zur Übermittlung moduliert werden,
b) eine Schnittstelle (60) zum Senden und Empfangen von Informationen (38) bezüglich bei Basisstationen (12, 14, 16) des Verbundes (32) empfangener Symbole über Kommunikationsverbindungen (40) zum Eliminieren von Interferenzen (36) und wobei
c) der Empfänger (50) zum kooperativen und dezentralen Demodulieren und Decodieren von empfangenen Symbolen zusammen mit anderen Basisstationen (12, 14, 16) des Verbundes (32) ausgebildet ist,
**dadurch gekennzeichnet, dass**
d) ein Ermittlungsmodul (56) zum Ermitteln eines statistischen Erwartungswerts eines empfangenen Symbols vorgesehen ist, wobei der statistische Erwartungswert als Information (38) zum Eliminieren von Interferenzen (36) an die restlichen Basisstationen des Verbundes übermittelt wird.

8. Basisstation (12, 14, 16) in einem Verbund (32) von Basisstationen (12, 14, 16) eines Mobilfunknetzes (10) zum Eliminieren von Interferenzen (36) beim Empfang von Daten (34) nach Anspruch 7, **gekennzeichnet durch** ein Quantisierungsmodul (58), welches ein am dichtesten am statistischen Erwartungswert liegendes Symbol des Modulationsalphabets auswählt und diesem Symbol entsprechende Bits als Quantisierung des statistischen Erwartungswerts für eine Übermittlung bereitstellt.

9. Basisstation (12, 14, 16) in einem Verbund (32) von Basisstationen (12, 14, 16) eines Mobilfunknetzes (10) zum Eliminieren von Interferenzen (36) beim Empfang von Daten (34) nach Anspruch 7 oder 8, **dadurch gekennzeichnet, dass** eine Optimierungseinheit (68) zum Optimieren von Rekonstruktionsniveaus der Quantisierung des statistischen Erwartungswerts jeweils nach einer Wahrscheinlichkeitsverteilung empfangener Symbole vorgesehen ist.

**Claims**

1. Method for eliminating interference (36) for a complex (32) of base stations (12, 14, 16) in a mobile radio network (10) upon reception of data (34) that are transmitted from mobile radio terminals (20, 22, 24) in the mobile radio network (10), wherein

a) the data (34) are coded on a mobile radio terminal (20, 22, 24) as symbols of a modulation alphabet and are modulated onto a carrier frequency for transmission,
b) information (38) regarding the symbols received on base stations (12, 14, 16) in the complex (32) is transmitted between the base stations (12, 14, 16) via communication links (40) in order to eliminate interference (36), and
c) the base stations (12, 14, 16) in the complex (32) demodulate and decode received symbols cooperatively and locally,
**characterized in that**
d) a respective statistical expected value for a received symbol is ascertained on a base station (12, 14, 16) of the complex (32) and is transmitted to the remainder of the base stations in the complex as information (38) for eliminating interference (36).

2. Method for eliminating interference (36) for a complex (32) of base stations (12, 14, 16) in a mobile radio network (10) upon reception of data (34) according to Claim 1, **characterized by** calculation of the statistical expected value from estimated values for the received symbol after a selected decoding step in a receiver (50) of the base station (12, 14, 16).

3. Method for eliminating interference (36) for a complex (32) of base stations (12, 14, 16) in a mobile radio network (10) upon reception of data (34) according to Claim 1 or 2, **characterized by** selection of a symbol of the modulation alphabet that is closest to the statistical expected value, and transmission of the bits corresponding to this symbol as quantization of the statistical expected value.

4. Method for eliminating interference (36) for a complex (32) of base stations (12, 14, 16) in a mobile radio network (10) upon reception of data (34) according to one of Claims 1 to 3, **characterized in that** a base station in the complex

a) uses received expected values from other base stations (12, 14, 16) in the complex (32) to reconstruct the respective symbols received on the other base stations (12, 14, 16) and
b) uses the reconstructed symbols in order to eliminate interference (36) for a received symbol.

**5.** Method for eliminating interference (36) for a complex (32) of base stations (12, 14, 16) in a mobile radio network (10) upon reception of data (34) according to one of Claims 1 to 4, **characterized in that** a new expected value for a received symbol is ascertained iteratively with received expected values and the new expected value is transmitted to other base stations (12, 14, 16) in the complex (32).

**6.** Method for eliminating interference (36) for a complex (32) of base stations (12, 14, 16) in a mobile radio network (10) upon reception of data (34) according to one of Claims 1 to 5, **characterized in that** a probability distribution for received symbols is used to optimize reconstruction levels for the quantization of the statistical expected value.

**7.** Base station (12, 14, 16) in a complex (32) of base stations (12, 14, 16) in a mobile radio network (10) for eliminating interference (36) upon reception of data (34) that are transmitted from mobile radio terminals (20, 22, 24) in the mobile radio network (10), containing

   a) a receiver (50) for receiving the data (34) that are coded on a mobile radio terminal (20, 22, 24) as symbols of a modulation alphabet and are modulated onto a carrier frequency for transmission,
   b) an interface (60) for sending and receiving information (38) regarding symbols received on base stations (12, 14, 16) in the complex (32) via communication links (40) in order to eliminate interference (36) and wherein
   c) the receiver (50) is designed for the cooperative and local demodulation and decoding of received symbols together with other base stations (12, 14, 16) of the complex (32),
   **characterized in that**
   d) an ascertainment module (56) is provided for ascertaining a statistical expected value for a received symbol, wherein the statistical expected value is transmitted to the remainder of the base stations in the complex as information (38) for eliminating interference (36).

**8.** Base station (12, 14, 16) in a complex (32) of base stations (12, 14, 16) in a mobile radio network (10) for eliminating interference (36) upon reception of data (34) according to Claim 7, **characterized by** a quantization module (58) that selects a symbol of the modulation alphabet that is closest to the statistical expected value and provides this symbol with appropriate bits as quantization of the statistical expected value for a transmission.

**9.** Base station (12, 14, 16) in a complex (32) of base stations (12, 14, 16) in a mobile radio network (10) for eliminating interference (36) upon reception of data (34) according to Claim 7 or 8, **characterized in that** an optimization unit (68) is provided for optimizing reconstruction levels for the quantization of the statistical expected value in each case on the basis of a probability distribution for received symbols.

**Revendications**

**1.** Procédé d'élimination des brouillages (36) pour un groupe interconnecté (32) de stations de base (12, 14, 16) d'un réseau radio mobile (10) lors d'une réception de données (34) qui sont transmises par des terminaux radio mobiles (20, 22, 24) dans le réseau radio mobile (10), dans lequel

   a) les données (34) sont codées dans un terminal radio mobile (20, 22, 24) sous la forme de symboles d'un alphabet de modulation et sont modulées sur une fréquence porteuse pour la transmission,
   b) des informations (38) concernant les symboles reçus sur des stations de base (12, 14, 16) du groupe interconnecté (32) sont transmises entre les stations de base (12, 14, 16) par l'intermédiaire de liaisons de communication (40) pour l'élimination des brouillages (36), et
   c) les stations de base (12, 14, 16) du groupe interconnecté (32) démodulent et décodent les symboles reçus de manière coopérative et décentralisée,
   **caractérisé en ce que**
   d) une valeur moyenne statistique respective d'un symbole sur une station de base (12, 14, 16) du groupe interconnecté (32) est déterminée et est transmise aux stations de base restantes du groupe interconnecté en tant qu'information (38) destinée à éliminer les brouillages (36).

**2.** Procédé d'élimination de brouillages (36) destiné à un groupe interconnecté (32) de stations de base (12, 14, 16) d'un réseau radio mobile (10) lors d'une réception de données (34) selon la revendication 1, **caractérisé par** un calcul de la valeur moyenne statistique à partir de valeurs estimées du symbole reçu conformément à une étape de décodage sélectionnée d'un récepteur (50) de la station de base (12, 14, 16).

**3.** Procédé d'élimination de brouillages (36) destiné à un groupe interconnecté (32) de stations de base (12, 14, 16) d'un réseau radio mobile (10) lors d'une réception de données (34) selon la revendication 1 ou 2, **caractérisé par** la sélection d'un symbole de l'alphabet de modulation qui se situe le plus près de la valeur moyenne statistique, et par la transmission de bits correspondant à ce symbole en tant que quantification de la valeur moyenne statistique.

4. Procédé d'élimination de brouillages (36) destiné à un groupe interconnecté (32) de stations de base (12, 14, 16) d'un réseau radio mobile (10) lors d'une réception de données (34) selon l'une quelconque des revendications 1 à 3, **caractérisé en ce que**, au niveau d'une station de base du groupe interconnecté,

   a) en utilisant des moyennes reçues par d'autres stations de base (12, 14, 16) du groupe interconnecté (32), des symboles respectifs reçus sur les autres stations de base (12, 14, 16) sont reconstruits, et
   b) les symboles reconstruits sont utilisés pour éliminer des brouillages (36) sur un symbole reçu.

5. Procédé d'élimination de brouillages (36) destiné à un groupe interconnecté (32) de stations de base (12, 14, 16) d'un réseau radio mobile (10) lors d'une réception de données (34) selon l'une quelconque des revendications 1 à 4, **caractérisé en ce qu'**une nouvelle valeur moyenne est déterminée de manière itérative en utilisant des valeurs moyennes reçues pour un symbole reçu et la nouvelle valeur moyenne est transmise à d'autres stations de base (12, 14, 16) du groupe interconnecté (32).

6. Procédé d'élimination de brouillages (36) destiné à un groupe interconnecté (32) de stations de base (12, 14, 16) d'un réseau radio mobile (10) lors d'une réception de données (34) selon l'une quelconque des revendications 1 à 5, **caractérisé en ce que** des niveaux de reconstruction de la quantification de la valeur moyenne statistique sont optimisés en utilisant une distribution de probabilité des symboles reçus.

7. Station de base (12, 14, 16) dans un groupe interconnecté (32) de stations de base (12, 14, 16) d'un réseau radio mobile (10), destinée à éliminer des brouillages (36) lors de la réception de données (34) qui sont transmises par des terminaux radio mobiles (20, 22, 24) dans le réseau radio mobile (10), comprenant :

   a) un récepteur (50) destiné à recevoir les données (34) qui sont codées dans un terminal radio mobile (20, 22, 24) sous la forme de symboles d'un alphabet de modulation et qui sont modulées sur une fréquence porteuse pour la transmission,
   b) une interface (60) destinée à émettre et recevoir des informations (38) concernant des symboles reçus sur des stations de base (12, 14, 16) du groupe interconnecté (32) par l'intermédiaire de liaisons de communication (40) pour éliminer des brouillages (36), et dans lequel
c) le récepteur (50) est conçu pour démoduler et décoder de manière coopérative et décentralisée des symboles reçus en association avec d'autres stations de base (12, 14, 16) du groupe interconnecté (32),
**caractérisé en ce que**
d) il est prévu un module de détermination (56) destiné à déterminer une valeur moyenne statistique d'un symbole reçu, dans lequel la valeur moyenne statistique est transmise aux stations de base restantes du groupe interconnecté en tant qu'information (38) destinée à éliminer des brouillages (36).

8. Station de base (12, 14, 16) dans un groupe interconnecté (32) de stations de base (12, 14, 16) d'un réseau radio mobile (10), destinée à éliminer des brouillages (36) lors de la réception de données (34) selon la revendication 7, **caractérisée par** un module de quantification (58) qui sélectionne un symbole se situant le plus près de la valeur moyenne statistique de l'alphabet de modulation et fournit des bits correspondant à ce symbole en tant que quantification de la valeur moyenne statistique pour la transmission.

9. Station de base (12, 14, 16) dans un groupe interconnecté (32) de stations de base (12, 14, 16) d'un réseau radio mobile (10), destinée à éliminer des brouillages (36) lors de la réception de données (34) selon la revendication 7 ou 8, **caractérisée en ce qu'**une unité d'optimisation (68) est respectivement prévue pour optimiser des niveaux de reconstruction de la quantification de la valeur moyenne statistique conformément à une distribution de probabilité de symboles reçus.

Fig. 1

Fig. 2

Fig. 3

Fig. 4

$$F_x(x) = p(x \leq x_{th})$$

$x_{th}$

$y_{th}$

$$F(x, y) = p(x \leq x_{th}, y \leq y_{th}) \qquad F_y(y) = p(y \leq y_{th})$$

$$P_a = 1 - F_x(x) - F_y(y) + F(x, y)$$
$$P_b = 1 - F(x, y)$$
$$P_c = 1 + F_x(x) + F_y(y) + F(x, y)$$

Fig. 5

Fig. 6

Fig. 7

**EP 2 342 876 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur

- **A.D. WYNER.** Shannon-theoretic approach to a Gaussian cellular multiple-access channel. *IEEE Transactions on Information Theory,* 1994, vol. 40 (6), 1713-1727
- **S. KHATTAK ; G. FETTWEIS.** Distributive iterative detection in interference limited cellular network. *Veh. Techn. Conf. Dublin, Proc. VTC Spring,* 2007
- **S. KATTAK et al.** Distributed iterative multi user detection through base station Cooperation. *EURASIP journal on Wireless Communications and Networks*
- **S. LLOYD.** Least squares quantization in PCM. *IEEE Trans. Inf. Theory,* 1982, vol. IT-28, 129-137
- **J. MAX.** Quantizing for minimum distortion. *IEEE Trans. Inf. Theory,* 1960, vol. 6, 7-12
- **S. KHATTAK ; W. RAVE ; G. FETTWEIS.** Distributed Iterative Multiuser Detection through Base Station Cooperation. *EURASIP J. on Wireless Comm. and Networking,* 2008